(19) Europäisches Patentamt
European Patent Office
Office européen des brevets

(11) EP 3 441 420 A1

(12) EUROPEAN PATENT APPLICATION
published in accordance with Art. 153(4) EPC

(43) Date of publication:
**13.02.2019 Bulletin 2019/07**

(21) Application number: **17779300.7**

(22) Date of filing: **27.03.2017**

(51) Int Cl.:
***C08J 5/18*** *(2006.01)* ***C08G 73/10*** *(2006.01)*
***C08L 79/08*** *(2006.01)*

(86) International application number:
**PCT/KR2017/003255**

(87) International publication number:
**WO 2017/176000 (12.10.2017 Gazette 2017/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.04.2016 KR 20160042872**

(71) Applicant: **LG Chem, Ltd.**
**Seoul 07336 (KR)**

(72) Inventors:
- **HONG, Ye Ji**
  **Daejeon 34122 (KR)**
- **KIM, Kyungjun**
  **Daejeon 34122 (KR)**
- **PARK, Jinyoung**
  **Daejeon 34122 (KR)**
- **PARK, Chan Hyo**
  **Daejeon 34122 (KR)**
- **LEE, Jin Ho**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) POLYIMIDE FILM HAVING IMPROVED HEAT RESISTANCE AND METHOD FOR MANUFACTURING SAME

(57) The present invention can provide a method for manufacturing a polyimide with improved thermal stability that has no contraction even at a high temperature, by adjusting the amount of an acid anhydride in the preparation of a polyimide precursor, and a polyimide film manufactured by the method causes residual stress in a substrate during a high-temperature thermal treatment procedure, thereby suppressing the occurrence of problems, such as cracks in an inorganic film or delamination of a film.

Fig. 1

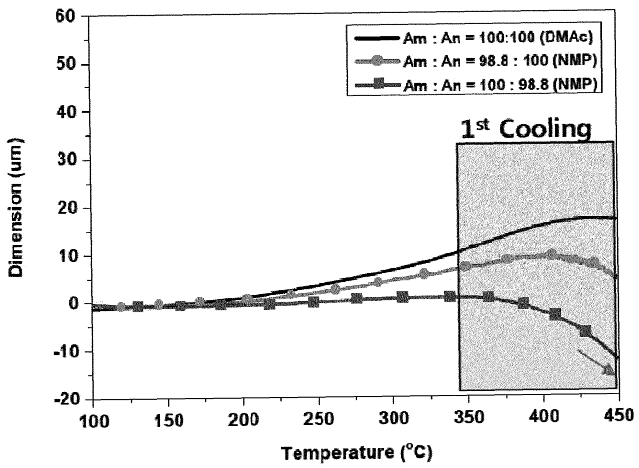


EP 3 441 420 A1

## Description

[Technical Field]

The present application claims the benefit of priority to Korean Patent Application No. 10-2016-0042872, filed on April 07, 2016, which is incorporated herein by reference in its entirety for all purpose.

The present invention relates to a polyimide film with improved heat resistance and a method for manufacturing thereof.

[Background Art]

Polyimide (PI) is a polymer having relatively low crystallinity or substantially amorphous structure, and it has advantages such as easy manufacturing process, easy process to make a thin film and no crosslinkable moieties necessary for curing, as well as polymeric properties such as high transparency, excellent thermal and chemical resistance, excellent mechanical and electrical properties, and dimensional stability due to its rigid chain structure. The polyimide is now widely used as an electrical and electronical material for the field of car and aerospace, a flexible circuit board, a liquid crystal alignment film for LCD, an adhesive as well as a coating agent.

However, even though the polyimide is a high performance polymer with excellent thermal stability, mechanical properties, chemical resistance and electrical properties, it does not satisfy the basic requirements for the display area such as colorless transparency, and the thermal expansion coefficient should be further lowered. For example, KAPTON sold by Dupont has a low thermal coefficient of about 30 ppm/°C, but it also does not meet the requirement for the plastic substrate. Therefore, now studies for minimizing change in thermal history and optical properties while maintaining the basic properties of the polyimide are underway.

However, for the application in the display area, it is still necessary to develop polyamide-imide for the flexible display with lower thermal expansion coefficient, high solubility, transparency as well as thermal stability.

[Disclosure]

[Technical Problem]

An object of the present invention is to provide a method for manufacturing a polyimide film with enhanced heat resistance.

Another object of the present invention is to provide a polyimide film manufactured by the method.

Further another object of the present invention is to provide a flexible display containing the polyimide film.

[Technical Solution]

In order to solve the above-mentioned technical problems, the present invention provides a polyimide film having a coefficient of thermal expansion as a positive value when 1$^{st}$ heating the polyimide film from 100°C to 450°C and then cooling thereof from 450°C to 100°C.

Further, the present invention provides a method for manufacturing the polyimide film which comprises the following steps of:

reacting an acid dianhydride of Chemical Formula 1 and a diamine of Chemical Formula 2 under a polymerization solvent to polymerize polyamic acid;
manufacturing a polyimide precursor composition comprising the polymerized polyamic acid and a solvent; and
coating the polyimide precursor composition on a substrate and then curing thereof to manufacture a polyimide film,
wherein the acid dianhydride of Chemical Formula 1 is reacted in an equal amount to or greater amount than the amount of the diamine of Chemical Formula 2:

[Chemical Formula 1]

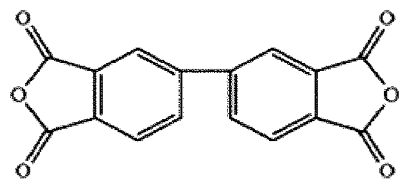

[Chemical Formula 2]

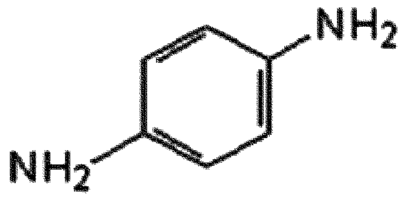

In order to solve another object of the present invention, the present invention provides a flexible display comprising the polyimide film.

[Advantageous Effects]

The present invention can provide a method for manufacturing a polyimide film with improved thermal stability that has no contraction even at a high temperature, by adjusting the amount of acid dianhydride in the preparation of a polyimide precursor, and a polyimide film manufactured by the method causes residual stress in a substrate during a high-temperature heat treatment procedure, thereby suppressing the occurrence of problems, such as cracks in an inorganic film or delamination of a film.

[Description of Drawings]

Fig. 1 is a graph showing dimension change according to temperature change during the $1^{st}$ cooling process.
Fig. 2 is a graph showing dimension change according to temperature change during the $2^{nd}$ heating process after $1^{st}$ cooling process.

[Best Mode Carrying out the Invention]

Various changes in form and details may be made to the presently disclosed embodiment and thus should not be construed as being limited to the aspects set forth herein. The presently disclosed embodiment is not limited to the aspects described in the present description, and thus it should be understood that the presently disclosed embodiment does not include every kind of variation example or alternative equivalent included in the spirit and scope of the presently disclosed embodiment. Also, while describing the aspects, detailed descriptions about related well-known functions or configurations that may diminish the clarity of the points of the aspects of the presently disclosed embodiment will be omitted. Unless particularly stated otherwise herein, all the compounds or functional groups may be substituted or unsubstituted. Herein, the term 'substituted' means that at least one hydrogen atom in such a compound or substituent has been replaced by any one substituent selected from the group consisting of a halogen atom, a $C_{1-10}$ alkyl group, a halogenated alkyl group, a $C_{3-30}$ cycloalkyl group, a $C_{6-30}$ aryl group, a hydroxyl group, a $C_{1-10}$ alkoxyl group, a carboxyl group, an aldehyde group, an epoxy group, a cyano group, a nitro group, an amino group, a sulfonic acid group and derivatives thereof.

Further, unless particularly stated otherwise herein, the term 'combination thereof means that two or more functional groups are bonded by a single bond, a double bond, a triple bond or a linking group such as a $C_{1-10}$ alkylene group (e.g., methylene group ($-CH_2$), ethylene group ($-CH_2CH_2-$), etc.), a $C_{1-10}$ fluoroalkylene group (e.g., fluoromethylene group ($-CF_2-$), a perfluoroethylene group ($-CF_2CF_2-$), etc.), a hetero atom such as N, O, P, S or Si, or a functional group containing thereof (e.g., intramolecular carbonyl group (-C=O-), ether group (-O-), ester group (-COO-), heteroalkylene group containing -S-, -NH-, -N=N-, etc.), or two or more functional groups are connected by condensation.

A flexible display has light, thin and unbreakable properties due to its free structure, and therefore its market demand is increasing. For realizing such flexible display, polyimide composed of 3,3',4,4'-biphenyltetracarboxylic dianhydride(BPDA)-phenylene diamine(PDA) with excellent heat resistance have been mainly used.

In general, when polymerizing polyimide for a substrate, diamine and dianhydride monomers are used at a ratio that the diamine is used more than the dianhydride. However, the substrate polymerized with excess diamine causes residual stress in a heat treatment procedure, thereby causing various defects such as cracks in an inorganic film, delamination of a film. The polyimide polymerized with excess diamine is advantageous on stability of viscosity and molecular weight, but the polyimide substrate polymerized with excess diamine shows a behavior that CTE at a high

temperature is reduced, and therefore there may be problems at a high temperature heat treatment process.

Accordingly, in order to solve the above problems, the present invention is objected to provide a method for manufacturing polyimide film that has no contraction even at a high temperature.

In order to solve the above object, the present invention provides a polyimide film having the coefficient of thermal expansion as a positive value when 1st heating the polyimide film from 100°C to 450°C and then cooling thereof from 450°C to 100°C.

The film may have the coefficient of thermal expansion as a positive value when cooling the polyimide film from 400°C to 350°C.

Further, the film may have the coefficient of thermal expansion as a positive value from 350°C to 450°C when 2nd heating the polyimide film, which was 1st heated and then cooled, from 100°C to 520°C.

Further, the film may have the difference between the coefficient of thermal expansion measured when cooling the polyimide film after the 1st heating and the coefficient of thermal expansion measured when 2nd heating the polyimide film from 100°C to 520°C is within ±10.0 ppm/°C.

Further, the film may have the coefficient of thermal expansion from 100°C to 300°C during the 1st heating is 1 ppm/°C to 10 ppm/°C.

Further, the film may have the coefficient of thermal expansion when cooling the polyimide film from 450°C to 100°C after the 1st heating is 0.5 ppm/°C to 8 ppm/°C.

Further, the film may have the coefficient of thermal expansion when 2nd heating the polyimide film from 100°C to 520°C is 1 ppm/°C to 13 ppm/°C.

Further, the present invention provides a method for manufacturing the polyimide film according to any one claim of claim 1 to claim 7 which comprises the following steps of:

reacting the acid dianhydride of Chemical Formula 1 and the diamine of Chemical Formula 2 under a polymerization solvent to polymerize polyamic acid;
manufacturing a polyimide precursor composition comprising the polymerized polyamic acid and a solvent; and
coating the polyimide precursor composition on a substrate and then curing thereof to manufacture a polyimide film,
wherein the acid dianhydride of Chemical Formula 1 is reacted in an equal amount to or greater amount than the amount of the diamine of Chemical Formula 2:

[Chemical Formula 1]

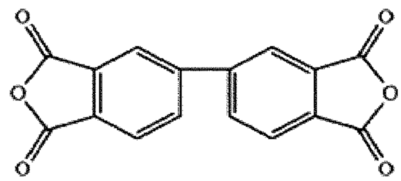

[Chemical Formula 2]

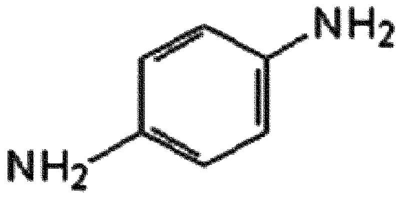

The present invention provides polyimide manufactured by reacting the acid dianhydride of Chemical Formula 1 and the diamine of Chemical Formula 2 in the conventional method for manufacturing polyimide for a flexible display.

In general, in the process of manufacturing polyimide, there have been endeavors for improving properties of a polyimide film, in particular, stability of viscosity and molecular weight of a polyimide precursor solution, by reacting the diamine in an excessive amount, but in the case of the polyimide manufactured by reacting the diamine in an excessive amount, there may be a problem that thermal stability such as coefficient of thermal expansion may be deteriorated. Accordingly, in order to provide polyimide having enhanced thermal stability and further improved mechanical properties, the present invention can provide a polyimide film, which has coefficient of thermal expansion as a positive value, i.e., has no contraction even at a high process temperature, by adding the acid dianhydride in an excessive amount.

The present invention can control the contraction reaction at a high temperature by adjusting a mixing ratio of

the acid dianhydride of Chemical Formula 1 and the diamine of Chemical Formula 2. More specifically, the present invention provides a method for manufacturing polyimide by reacting acid dianhydride in an equal amount to or greater amount than the amount of diamine, so as to make the true coefficient of thermal expansion as a positive value equal to or greater than 0 in a temperature range of 350°C or higher, i.e., the glass transition temperature of the manufactured polyimide or higher.

At this time, the true coefficient of thermal expansion can be defined as the slope of the tangent of the temperature versus sample length relation curve at a certain temperature, and the curve is measured by using a thermomechanical analyzer (TMA) which measures size change caused by expansion and contraction of a sample.

Thermal expansion by temperature can be quantified by length change of a sample and the like. Accordingly, the coefficient of thermal expansion (CTE) of a sample is defined as a length change rate of a sample according to temperature change. However, degree of thermal expansion of a material used in a wide temperature range may vary depending on temperature, and therefore, there will be occasions where strict definition about the coefficient of thermal expansion considering measuring conditions is necessary.

The coefficient of thermal expansion is mainly classified into an average coefficient of thermal expansion defined in a measuring temperature range ($T=T_2-T_1$) and a true coefficient of thermal expansion defined at a specific temperature. Formula 1 defines the average coefficient of thermal expansion where length change of a sample (L) in a measuring temperature range (T) is divided by temperature change ($T_2-T_1$). Accordingly, it is a concept that changes of a sample between two different temperatures are averaged. Herein, unless mentioned otherwise, the coefficient of thermal expansion refers to average coefficient of thermal expansion.

[Formula 1]

$$\text{Average coefficient of thermal expansion} = \frac{1}{L_{T1}} \frac{(L_{T_2}-L_{T_1})}{(T_2-T_1)} = \frac{1}{L_{T_1}} \frac{dL}{dT}$$

On the other hand, as shown in Formula 2, sometimes, coefficient of thermal expansion is defined at a specific temperature not a temperature range, and it is called a true coefficient of thermal expansion. The true coefficient of thermal expansion is a value where thermal expansion at a specific temperature is divided by initial length of a sample. Simply, it may be regarded as a differential value of thermal expansion depending on temperature.

[Formula 2]

$$\text{True coefficient of thermal expansion} = \lim_{t \to T} \frac{1}{L} \frac{(L_t-L_T)}{(t-T)} = \frac{1}{L_T} \frac{dL}{dT}$$

The true coefficient of thermal expansion can be used when examining how coefficient of thermal expansion of a sample is changed in a broad temperature range.

The present invention provides a method for manufacturing polyimide which can adjust the average coefficient of thermal expansion to have a positive value by adjusting the true coefficient of thermal expansion at a high temperature, specifically at a temperature of 350°C or higher to have a positive value equal to or greater than 0.

According to one embodiment, the amount of the acid dianhydride of Chemical Formula 1 and the diamine of Chemical Formula 2 may be adjusted within a molar ratio range from 1:1 to 1:0.95, preferably from 1:0.99 to 1:0.95, or from 1:0.99 to 1:0.96, or from 1:0.99 to 1:0.97. More preferably, the compounds may be reacted at a molar ratio of 1:0.99 to 1:0.98, and within the range, a sample may be not shrunk at a high temperature, and also other mechanical properties of the polyimide, for example, properties such as cracks and adhesiveness with a substrate can be maintained. For example, the true coefficient of thermal expansion of the polyimide manufactured at the above mixing ratio may be the true coefficient of thermal expansion at 350°C or higher, preferably in a temperature range from 350°C to 400°C, i.e., the slope of the curve may have a positive value equal to or greater than 0. When the diamine is contained in an excessive amount, the true coefficient of thermal expansion may have a negative value, i.e., the negative slope, and therefore, a sample may be shrunk as the temperature increases.

In the present invention, by adjusting the true coefficient of thermal expansion to have a positive value equal to or greater than 0, the average coefficient of thermal expansion in the entire temperature range also can be adjusted to have a positive value. For example, the average coefficient of thermal expansion of the polyimide manufactured according to the present invention may be 0 ppm/°C to 20 ppm/°C, preferably 0 ppm/°C to 15 ppm/°C, more preferably

0 ppm/°C to 12 ppm/°C. When the content of the diamine of Chemical Formula 2 is lower than the content of the acid dianhydride of Chemical Formula 1, the average coefficient of thermal expansion may be 0 ppm/°C to 5 ppm/°C.

According to one embodiment, when the acid dianhydride and the diamine are reacted at the same mixing ratio, the true coefficient of thermal expansion has a positive value, but according to a more preferred embodiment, the polyimide manufactured in an excessive amount may exhibit lower absolute true coefficient of thermal expansion in the entire temperature range than the polyimide manufactured at the same mixing ratio of 1:1, and the polyimide may also exhibit the low absolute true coefficient of thermal expansion even in a temperature range of 350°C or higher.

Further, in the polyimide according to the present invention, change of coefficient of thermal expansion may different between thermal expansion occurred in a cooling process after the 1st heating process and thermal expansion occurred in the 2nd heating process after the cooling process, and generally the thermal expansion change caused by heating may be larger. For example, the thermal expansion change caused by cooling in a range from 450°C to 100°C may have average coefficient of thermal expansion value of 0 ppm/°C to 10 ppm/°C, preferably 0.5 ppm/°C to 8 ppm/°C, more preferably 1 ppm/°C to 6 ppm/°C. The thermal expansion change caused by heating in the 2nd heating process after the cooling process in a range from 100°C to 520°C may have average coefficient of thermal expansion value of 0 ppm/°C to 20 ppm/°C, preferably 0 ppm/°C to 15 ppm/°C, more preferably 1 ppm/°C to 13 ppm/°C, which is somewhat higher than the coefficient of thermal expansion in the cooling process.

Further, according to more preferred example, the present invention can exhibit lower average coefficient of thermal expansion than the case that the acid dianhydride is added in an excessive amount compared to the mixing ratio of 1:1. For example, in the case of the polyimide manufactured by reacting the acid dianhydride and the diamine at a mixing ratio of 1:0.99 to 1:0.98, the average coefficient of thermal expansion in the both heating and cooling process may be 0 ppm/°C to 10 ppm/°C, preferably 0 ppm/°C to 6 ppm/°C, more preferably 0 ppm/°C to 3 ppm/°C, and in the 2nd heating process after the cooling process, the difference of the average coefficient of thermal expansion may be within the error range of ±10.0 ppm/°C, preferably within ±5.0 ppm/°C, more preferably within ±2.0 ppm/°C. Thus, this can prove that thermal stability of polyimide may be more stable when the acid dianhydride is reacted in more amount than the diamine.

In the method for manufacturing polyimide, as occasion demands, polyimide manufactured by polymerizing acid dianhydride of the following Chemical Formula 3 and diamine of the following Chemical Formula 4 can be copolymerized or blended with the acid dianhydride of Chemical Formula 1 and the diamine of Chemical Formula 2.

However, in the case of copolymerization, the compounds may be mixed at a mixing ratio without departing from the above mixing ratio, and the acid dianhydride of Chemical Formula 1 should be added in a content of 80 mol% or more, preferably 90 mole% or more, more preferably 95 mol% or more, based on the total content of the added acid dianhydride 100 mol, and the diamine of Chemical Formula 2 should be added in a content of 80 mol% or more, preferably 90 mol% or more, more preferably 95 mol% or more, based on the total content of the added diamine 100 mol.

[Chemical Formula 3]

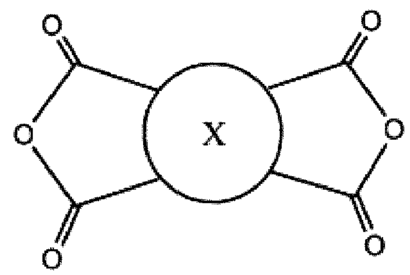

[Chemical Formula 4]

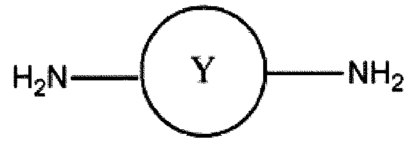

According to the present invention, X may be a tetravalent organic group containing a $C_{3-24}$ aliphatic ring or a $C_{6-30}$ aromatic ring. Specifically, it may be a tetravalent organic group containing an aromatic or aliphatic ring having a rigid structure, i.e., a single ring structure, a structure wherein rings are linked by a single bond, or a polycyclic structure wherein rings are linked directly. For example, a tetravalent organic group of the following Chemical Formulas 3a to 3k,

but not limited thereto.

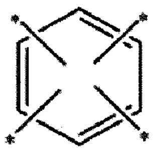
(3a)

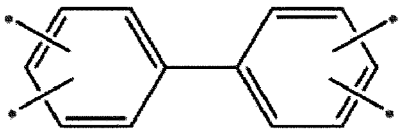
(3b)

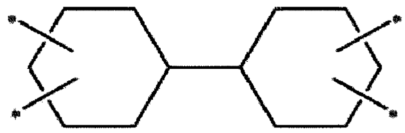
(3c)

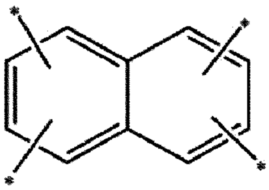
(3d)

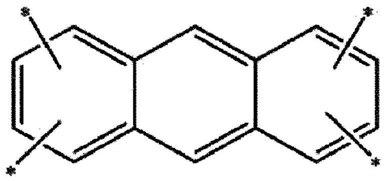
(3e)

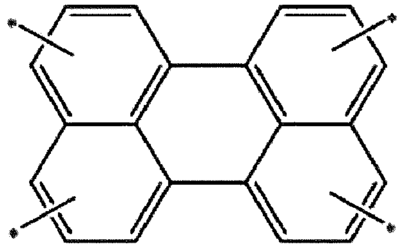
(3f)

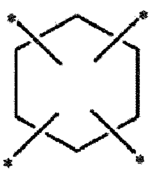
(3g)

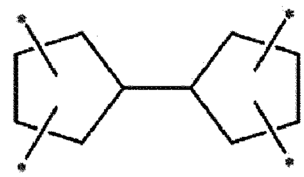
(3h)

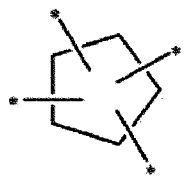
(3i)

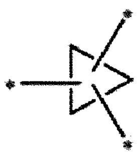
(3j)

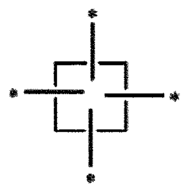
(3k)

At least one hydrogen atom in the tetravalent organic group of Chemical Formulas 3a to 3k may be replaced by a substituent selected from the group consisting of a $C_{1-10}$ alkyl group (e.g., methyl, ethyl, propyl, isopropyl, t-butyl, pentyl, hexy and the like), a $C_{1-10}$ fluoroalkyl group (e.g., fluoromethyl, perfluoroethyl, trifluoromethyl and the like), a $C_{6-12}$ aryl group (for example, phenyl, naphthalenyl and the like), a sulfonic acid group and a carboxyl group, preferably a $C_{1-10}$ fluoroalkyl group.

Y may be each independently a $C_{4-30}$ aliphatic, alicyclic or $C_{6-30}$ aromatic divalent organic group or a combination thereof, and derived from diamine containing a structure selected from divalent organic groups wherein aliphatic, alicyclic or aromatic divalent organic groups are linked directly or through a crosslinking structure. For example, Y may be a divalent organic group containing a $C_{6-30}$ monocyclic or polycyclic aromatic structure, a $C_{6-30}$ monocyclic or polycyclic alicyclic structure, or a structure wherein at least two thereof are linked by a single bond. More specifically, Y may be a divalent organic group containing an aromatic or aliphatic ring having a rigid structure, i.e., a single ring structure, a structure wherein rings are linked by a single bond, or a polycyclic structure wherein rings are linked directly. For example, it may be divalent organic groups of the following Chemical Formulas 4a to 4k, but not limited thereto.

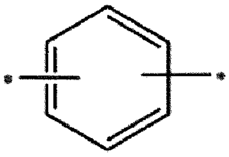

(4a)

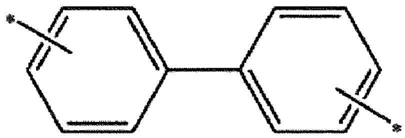

(4b)

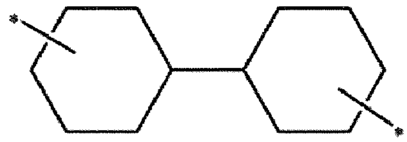

(4c)

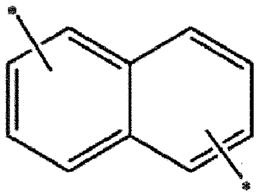

(4d)

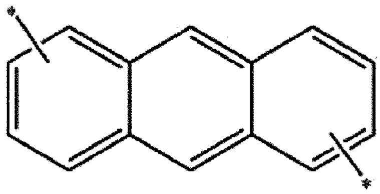

(4e)

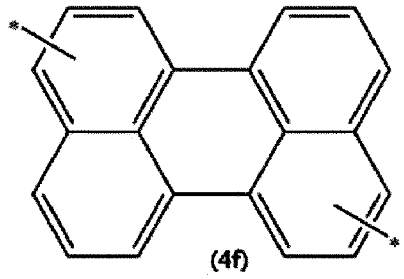

(4f)

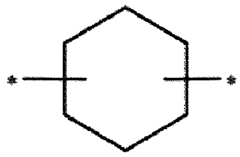

(4g)

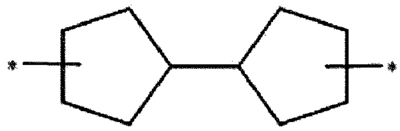

(4h)

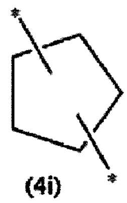

(4i)

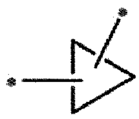

(4j)

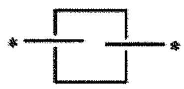

(4k)

At least one hydrogen atom in the divalent organic group of Chemical Formulas 4a to 4k may be replaced by a substituent selected from the group consisting of a $C_{1-10}$ alkyl group (e.g., methyl, ethyl, propyl, isopropyl, t-butyl, pentyl, hexyl and the like), a $C_{1-10}$ fluoroalkyl group (e.g., fluoromethyl, perfluoroethyl, trifluoromethyl and the like), a $C_{6-12}$ aryl group (for example, phenyl, naphthalenyl and the like), a sulfonic acid group and a carboxyl group, preferably a $C_{1-10}$ fluoroalkyl group.

Like the Chemical Formulas 3a to 3k or 4a to 4k, as the content of the monomer having an organic group of a rigid structure is increased, heat resistance at a high temperature of a polyimide film may be increased, and together with an organic group of a flexible structure, a polyimide film with improved transparency and heat resistance can be manufactured.

The polymerization reaction of the acid dianhydride and the diamine-based compound may be carried out by any common polymerization method such as solution polymerization, for manufacturing polyimide or its precursor.

The reaction may be performed under anhydrous condition, and the polymerization may be performed at a temperature of -75°C to 50°C, preferably 0°C to 40°C.

The polymerization is performed by adding the acid dianhydride into the diamine-based compound dissolved in an organic solvent. The diamine-based compound and the acid dianhydride-based compound are contained in an amount of about 10 wt% to 30 wt% in a polymerization solvent. Molecular weight is controlled according to polymerization time and reaction temperature.

Further, the organic solvent which can be used for the polymerization may be, specifically, selected from the group consisting of ketones such as γ-butyrolactone, 1,3-dimethyl-imidazolidinone, methylethyl ketone, cyclohexanone, cyclopentanone, 4-hydroxy-4-methyl-2-pentanone and the like; aromatic hydrocarbons such as toluene, xylene, tetramethylbenzene and the like; glycol ethers (cellosolve) such as ethyleneglycol monoethyl ether, ethyleneglycol monomethyl ether, ethyleneglycol monobutyl ether, diethyleneglycol monoethyl ether, diethyleneglycol monomethyl ether, diethyleneglycol monobutyl ether, propyleneglycol monomethyl ether, propyleneglycol monoethyl ether, dipropyleneglycol diethyl ether, triethyleneglycol monoethyl ether and the like; ethyl acetate, butyl acetate, ethyleneglycol monoethyl ether acetate, ethyleneglycol monobutyl ether acetate, diethyleneglycol monoethyl ether acetate, dipropyleneglycol monomethyl ether acetate, ethanol, propanol, ethyleneglycol, propyleneglycol, carbitol, dimethyl acetamide (DMAc), N,N-diethyl acetamide, dimethyl formamide (DMF), diethyl formamide (DEF), N-methyl pyrrolidone (NMP), N-ethyl pyrrolidone (NEP), N-vinyl pyrrolidone, 1,3-dimethyl-2-imidazolidinone, N,N-dimethylmethoxy acetamide, dimethyl sulfoxide, pyridine, dimethyl sulfone, hexamethyl phosphoramide, tetramethyl urea, N-methyl caprolactam, tetrahydrofuran, m-dioxane, P-dioxane, 1,2-dimethoxyethane, bis(2-methoxyethyl)ether, 1,2-bis(2-methoxyethoxy)ethane, bis[2-(2-methoxyethoxy)]ether, and a mixture thereof.

More preferably, the solvent may be a sulfoxide-based solvent such as dimethyl sulfoxide, diethyl sulfoxide and the like; a formamide-based solvent such as N,N-dimethyl formamide, N,N-diethyl formamide and the like; an acetamide-based solvent such as N,N-dimethyl acetamide, N,N-diethyl acetamide and the like; a pyrrolidone-based solvent such as N-methyl-2-pyrrolidone, N-vinyl-2-pyrrolidone and the like, and the solvent may be used alone or as a mixture thereof, but not limited thereto. An aromatic hydrocarbon such as xylene and toluene may be further used, and in order to accelerate dissolution of the polymer, an alkali metal salt or alkali earth metal salt may be further added to the solvent in an amount of about 50 wt% or less, based on the total amount of the solvent.

When synthesizing the polyamic acid or polyimide of the present invention, in order to inactivating the excess polyamino group or acid anhydride group, an end capping agent, which caps the end of the polyimide by reacting the end of the molecule with dicarboxylic acid anhydride or monoamine, may be further addded.

The method for manufacturing a polyimide film by using the manufactured polyimide precursor composition comprises the steps of coating the polyimide precursor composition on one side of a substrate, imidizing and curing thereof, and then separating the film from the substrate.

Specifically, the polyimide precursor composition manufactured by the above method may be in the form of a solution wherein a polyimide precursor is dissolved in an organic solvent, and in this case, for example, when the polyimide precursor is synthesized in the organic solvent, the solution may be the reaction solution thus obtained itself, or a solution obtained by diluting the reaction solution with the same solvent or another solvent.

The polyimide precursor composition may contain the solid component in such an amount that the composition has an appropriate viscosity considering its film formation processability such as coatability. The solid component may be contained in an amount of 5 wt% to 20 wt%, based on the total weight of the polyimide precursor composition, or the amount of the solid component may preferably be controlled such that the polyimide precursor composition has viscosity of 400 cP to 50,000 cP. If the viscosity of the polyimide precursor composition is less than 400 cP or more than 50,000 cP, fluidity may be deteriorated when manufacturing a display substrate by using the polyimide precursor composition, thereby causing problems on the manufacturing process, for example, uneven coating.

Next, the polyimide precursor composition may be coated on one side of a substrate, thermally imidized and cured at a temperature of 80°C to 400°C, and then separated from the substrate to manufacture a polyimide-based film.

At this time, the substrate may be, for example, a glass, metal or plastic substrate but is not particularly limited thereto. Particularly preferred is a glass substrate that is highly stable against heat and chemicals during imidizing and curing processes for the polyimide precursor, and can be easily separated without damage to the polyimide-based film formed after curing, avoiding the need for further treatment with a release agent.

Further, the coating process may be performed by any common coating method. Specifically, spin coating, bar coating, roll coating, air-knife coating, gravure coating, reverse roll coating, kiss roll coating, doctor blade coating, spraying, dipping or brushing may be used. Particularly, casting method is more preferred that can be performed in a continuous process and can increase the imidization rate of the polyimide-based resin.

Further, the polyimide-based solution can be coated on the substrate to a thickness such that the final polyimide-based film has a suitable thickness for its use as a display substrate.

Specifically, the polyimide-based solution can be coated in an amount that the polyimide-based film has a thickness of 10 to 30 μm. After coating the polyimide precursor composition, a drying process may be optionally further performed prior to a curing process to remove the solvent present in the polyimide precursor composition.

The drying process may be performed by any common method. Specifically, the drying can be performed at a temperature of 140°C or lower or at a temperature of 80°C to 140°C. If the drying temperature is lower than 80°C., a long time is required for drying. Meanwhile, if the drying temperature exceeds 140°C., imidization proceeds rapidly, which makes it difficult to obtain a uniform thickness of the polyimide-based film.

Subsequently, the curing process may be performed by heating at a temperature of 80°C to 400°C. The curing process may be also performed by stepwise heat treatment at various temperatures within the temperature range defined above. Further, the curing time is not especially limited and may be, for example, from 3 min to 30 min.

Further, after the curing process, subsequent heat treatment may be optionally further performed to increase the imidization rate of the polyimide-based resin in the polyimide-based film, thereby forming a polyimide-based film having the aforementioned physical properties.

The subsequent heat treatment is preferably performed at a temperature of at least 200°C, or a temperature

of 200°C to 450°C. for 1 to 30 minutes. Further, the subsequent heat treatment may be performed either only once or at least twice in a stepwise manner. Specifically, the heat treatment may performed by three heat treatment steps including primary heat treatment at 200°C to 220°C, secondary heat treatment at 300°C to 350°C and tertiary heat treatment at 400°C to 450.

Then, the polyimide-based film formed on the substrate may be detached from the substrate by any common method to manufacture a polyimide-based film.

The polyimide according to the present invention may have a glass transition temperature of about 360°C or higher.

Due to such excellent heat resistance, the film containing the polyimide can maintain excellent heat resistance and mechanical properties against high-temperature heat applied during a device manufacturing process.

Further, by using the polyimide-based film as a display substrate, deterioration of reliability such as shrinkage and warpage of coating during manufacturing a device on the display substrate may be suppressed. As a result, it is possible to manufacture devices having more enhanced characteristics and reliability. Accordingly, the polyimide can be particularly useful for manufacturing a flexible substrate of electronic devices such as OLED or LCD, electronic paper and solar cells.

[Mode for Invention]

The present invention will be explained in detail with reference to the following examples, including test examples. However, these examples are provided for illustrative purposes only and are not intended to limit the scope of the invention.

## Example

<Example 1> Polymerization of BPDA-pPDA(1:1) polyimide

Biphenyl dianhydride (BPDA) 1 mol was dissolved in dimethyl acetamide (DMAc) 2 kg, para-phenylenediamine(p-PDA) 1 mol and dimethyl acetamide (DMAc) 1 kg were added thereto and then polymerized at 25°C for 24 hours to prepare a polyimide precursor solution.

The prepared polyimide precursor composition was spin coated on a glass substrate. The polyimide precursor composition-coated glass substrate was put into an oven and heated at a rate of 4°C /min, and cured at 120°C for 30 min, at 200°C for 30 min, at 350°C for 30 min and at 450°C for 60 min. After completing the curing process, the film formed on the glass substrate was detached to manufacture a film.

<Example 2> Polymerization of BPDA-pPDA(1:0.988) polyimide

Biphenyl dianhydride (BPDA) 1 mol was dissolved in N-methyl pyrrolidone (NMP) 2 kg, para-phenylenediamine(p-PDA) 0.988 mol and NMP 1 kg were added thereto and then polymerized at 25°C for 24 hours to prepare a polyimide precursor solution.

The prepared polyimide precursor composition was spin coated on a glass substrate. The polyimide precursor composition-coated glass substrate was put into an oven and heated at a rate of 4°C /min, and cured at 120°C for 30 min, at 200°C for 30 min, at 350°C for 30 min and at 450°C for 60 min. After completing the curing process, the film formed on the glass substrate was detached to manufacture a film.

<Comparative Example 1> Polymerization of BPDA-pPDA(0.988:1) polyimide

Biphenyl dianhydride (BPDA) 0.988 mol was dissolved in N-methyl pyrrolidone (NMP) 2 kg, para-phenylenediamine(p-PDA) 0.988 mol and NMP 1 kg were added thereto and then polymerized at 25°C for 24 hours to prepare a polyimide precursor solution.

The prepared polyimide precursor composition was spin coated on a glass substrate. The polyimide precursor composition-coated glass substrate was put into an oven and heated at a rate of 4°C /min, and cured at 120°C for 30 min, at 200°C for 30 min, at 350°C for 30 min and at 450°C for 60 min. After completing the curing process, the film formed on the glass substrate was detached to manufacture a film.

<Test Example 1> Measuring thermal expansion change during cooling process

Each of the polyimide-based film manufactured in Examples 1 and 2 and Comparative Example 1 was cut to a size of 5x20 mm and the sample was loaded using an accessory. The real length of the film for measurement was set to 16 mm. The force to pull the film was set to 0.02 N and thermal expansion change pattern when the film was subjected

to 1st heating process at a rate of 4°C/min in a temperature range from 100°C to 450°C and then cooled at a rate of 4°C/min in a temperature range from 450°C to 100°C was measured using a TMA (Q400, TA).

In Examples 1 and 2, the coefficients of thermal expansion in a temperature range from 100°C to 300°C in the 1st heating process were measured as 6 ppm/°C and 4 ppm/°C, respectively.

The size change of the sample according to the temperature change caused by the cooling was shown in Fig. 1, and the average coefficient of thermal expansion measured in the above temperature range was shown in the following Table 1.

<Test Example 2> Measuring thermal expansion change during heating process

The thermal expansion change of the sample was measured using a TMA while heating the sample cooled in Test Example 1 at a heating rate of 5°C/min from 100°C to 520°C.

The size change of the sample according to the temperature change caused by the heating was shown in Fig. 1, and the average coefficient of thermal expansion measured in the above temperature range was shown in the following Table 1.

[Table 1]

| | Coefficient of thermal expansion (ppm/°C) | |
|---|---|---|
| | Cooling from 450°C to 100°C | Heating from 100°C to 520°C |
| Example 1 | 5.8 | 11.0 |
| Example 2 | 2.3 | 2.4 |
| Comparative Example 1 | -0.4 | -2.9 |

From the above results, as shown in Fig, 1 and Fig. 2, Examples 1 and 2 wherein the acid dianhydride is reacted in an equal amount or excessive amount to the diamine generally showed the positive slope in a temperature range of 350°C or higher, and it means that the true coefficient of thermal expansion represented by the slope of the curve has a positive value equal to or greater than 0. Further, because Examples 1 and 2 showed the positive true coefficient of thermal expansion in the above temperature range, the average coefficient of thermal expansion in the measured temperature range may have a positive value. On the other hand, the polyimide manufactured by reacting the diamine in an excessive amount had a negative slope of the curve in a temperature range of 350°C or higher, and it means that the true coefficient of thermal expansion in the above temperature range has a negative value, i.e., that the sample was shrunk. Accordingly, the average coefficient of thermal expansion in the entire measured temperature range had a negative value, and from the results of Table 1, this pattern can be more clearly showed in the heating process after the cooling process. On the other hand, it can be found that in Examples 1 and 2, particularly Example 2, the change on the coefficient of thermal expansion was relatively small in the heating process after the cooling process, and it may be an indicator showing that the polyimide according to the present invention has excellent heat resistance.

Although specific embodiments of the present invention are described in detail as described above, it will be apparent to those skilled in the art that the specific description is merely desirable exemplary embodiment and should not be construed as limiting the scope of the present invention. Therefore, the substantial scope of the present invention is defined by the accompanying claims and equivalent thereof.

## Claims

1. A polyimide film having a coefficient of thermal expansion as a positive value when 1st heating the polyimide film from 100°C to 450°C and then cooling thereof from 450°C to 100°C.

2. The polyimide film according to claim 1, which has the coefficient of thermal expansion as a positive value when cooling the polyimide film from 400°C to 350°C.

3. The polyimide film according to claim 1, which has the coefficient of thermal expansion as a positive value from 350°C to 450°C when 2nd heating the polyimide film, which was 1st heated and then cooled, from 100°C to 520°C.

4. The polyimide film according to claim 3, the difference between the coefficient of thermal expansion measured when cooling the polyimide film after the 1st heating and the coefficient of thermal expansion measured when 2nd heating

the polyimide film from 100°C to 520°C is within ±10.0 ppm/°C.

**5.** The polyimide film according to claim 1, wherein the coefficient of thermal expansion from 100°C to 300°C during the 1st heating is 1 ppm/°C to 10 ppm/°C.

**6.** The polyimide film according to claim 1, wherein the coefficient of thermal expansion when cooling the polyimide film from 450°C to 100°C after the 1st heating is 0.5 ppm/°C to 8 ppm/°C.

**7.** The polyimide film according to claim 3, wherein the coefficient of thermal expansion when 2nd heating the polyimide film from 100°C to 520°C is 1 ppm/°C to 13 ppm/°C.

**8.** A method for manufacturing the polyimide film according to any one of claim 1 to claim 7 which comprises the following steps of:

Reacting an acid dianhydride of Chemical Formula 1 and a diamine of Chemical Formula 2 under a polymerization solvent to polymerize polyamic acid;
manufacturing a polyimide precursor composition comprising the polymerized polyamic acid and a solvent; and coating the polyimide precursor composition on a substrate and then curing thereof to manufacture a polyimide film, wherein the acid dianhydride of Chemical Formula 1 is reacted in an equal amount to or greater amount than the amount of the diamine of Chemical Formula 2:

[Chemical Formula 1]

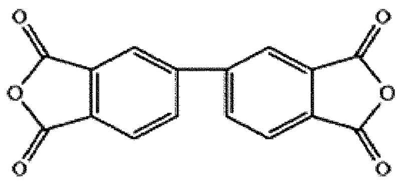

[Chemical Formula 2]

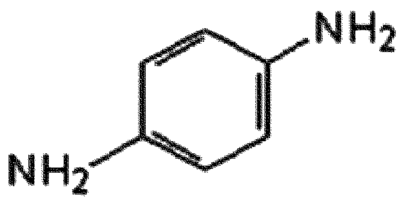

**9.** The method for manufacturing the polyimide film according to claim 8, the amounts of the acid dianhydride of Chemical Formula 1 and the diamine of Chemical Formula 2 are adjusted in a range of 1:0.99 to 1:0.95 to adjust the coefficient of thermal expansion of the polyimide film thus obtained.

**10.** The method for manufacturing the polyimide film according to claim 8, the amounts of the acid dianhydride of Chemical Formula 1 and the diamine of Chemical Formula 2 are adjusted in a range of 1:0.99 to 1:0.98 to adjust the coefficient of thermal expansion of the polyimide film thus obtained.

**11.** The method for manufacturing the polyimide film according to claim 8, wherein the organic solvent contained in the polyimide precursor composition is a pyrrolidone-based solvent.

**12.** A substrate material for a flexible display comprising the polyimide film according to any one of claim 1 to claim 7.

Fig. 1

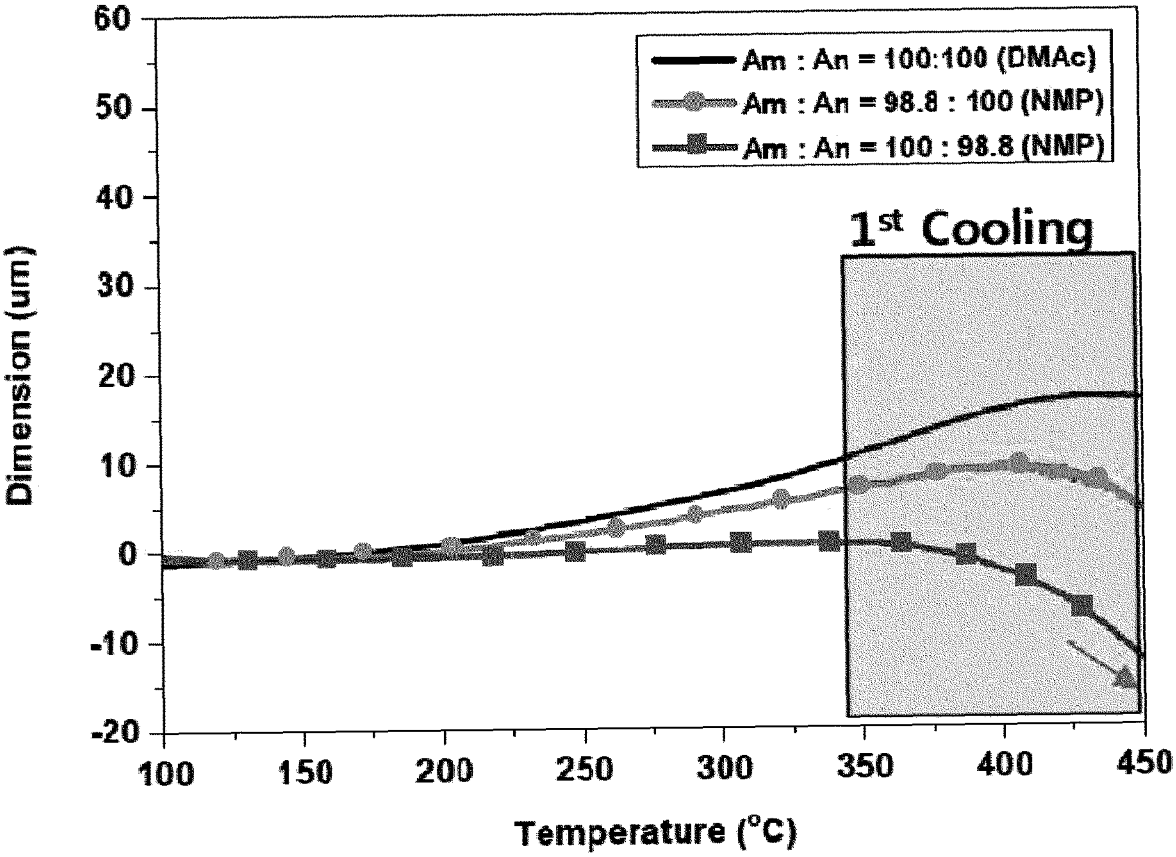
Am : An = 100:100 (DMAc)
Am : An = 98.8 : 100 (NMP)
Am : An = 100 : 98.8 (NMP)
1st Cooling
Dimension (um)
Temperature (°C)
60
50
40
30
20
10
0
-10
-20
100
150
200
250
300
350
400
450

Fig. 2

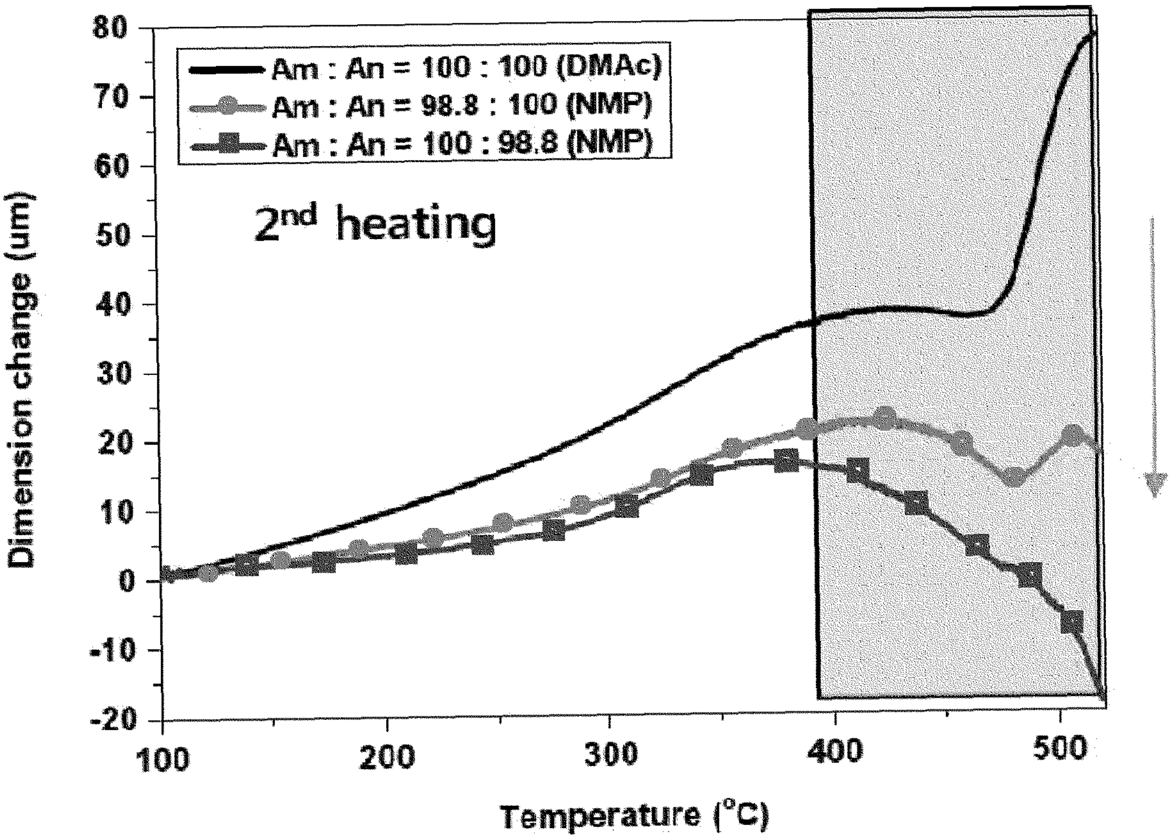
Am : An = 100 : 100 (DMAc)
Am : An = 98.8 : 100 (NMP)
Am : An = 100 : 98.8 (NMP)
2nd heating
Dimension change (um)
Temperature (°C)
80
70
60
50
40
30
20
10
0
-10
-20
100
200
300
400
500

**INTERNATIONAL SEARCH REPORT**

International application No.
**PCT/KR2017/003255**

A. CLASSIFICATION OF SUBJECT MATTER

***C08J 5/18(2006.01)i, C08G 73/10(2006.01)i, C08L 79/08(2006.01)i***

According to International Patent Classification (IPC) or to both national classification and IPC

B. FIELDS SEARCHED

Minimum documentation searched (classification system followed by classification symbols)
C08J 5/18; B32B 17/04; B32B 7/02; C08L 79/08; B32B 15/088; C08G 73/10; C08J 7/04; B32B 15/08; B32B 27/34

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal), STN(Registry, Caplus), google & Keywords: polyamide, coefficient of expansion, pumped water, diamine, anhydride, flexible, display

C. DOCUMENTS CONSIDERED TO BE RELEVANT

| Category* | Citation of document, with indication, where appropriate, of the relevant passages | Relevant to claim No. |
|---|---|---|
| X | WO 2014-129464 A1 (NIPPON STEEL & SUMIKIN CHEMICAL CO., LTD.) 28 August 2014 See claims 1, 12, 13; and paragraphs [0024], [0108], [0109], [0117]. | 1-12 |
| X | JP 2014-218056 A (UNITIKA LTD.) 20 November 2014 See claims 1-5; and paragraphs [0002], [0053]. | 1-12 |
| X | KR 10-2011-0092761 A (LG CHEM. LTD.) 18 August 2011 See claim 1; and paragraph [0044]. | 1-8,11 |
| X | KR 10-2015-0040200 A (INDUSTRIAL TECHNOLOGY RESEARCH INSTITUTE) 14 April 2015 See claims 1, 2; and paragraphs [0028]-[0034]. | 1-8 |
| X | JP 2006-299196 A (TOYOBO CO., LTD.) 02 November 2006 See claim 1; and paragraph [0044]. | 1-8 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 JULY 2017 (25.07.2017) | **25 JULY 2017 (25.07.2017)** |

Name and mailing address of the ISA/KR
Korean Intellectual Property Office
Government Complex-Daejeon, 189 Seonsa-ro, Daejeon 302-701, Republic of Korea
Facsimile No. +82-42-481-8578

Authorized officer

Telephone No.

Form PCT/ISA/210 (second sheet) (January 2015)

**INTERNATIONAL SEARCH REPORT**
Information on patent family members

International application No.
**PCT/KR2017/003255**

| Patent document cited in search report | Publication date | Patent family member | Publication date |
|---|---|---|---|
| WO 2014-129464 A1 | 28/08/2014 | TW 201500207 A | 01/01/2015 |
| JP 2014-218056 A | 20/11/2014 | NONE | |
| KR 10-2011-0092761 A | 18/08/2011 | KR 10-1257413 B1 | 23/04/2013 |
| KR 10-2015-0040200 A | 14/04/2015 | CN 104512075 A | 15/04/2015 |
| | | JP 2015-074783 A | 20/04/2015 |
| | | JP 6062894 B2 | 18/01/2017 |
| | | KR 10-1603654 B1 | 15/03/2016 |
| | | TW 201514007 A | 16/04/2015 |
| | | TW I555637 B | 01/11/2016 |
| | | US 2015-0099088 A1 | 09/04/2015 |
| | | US 9388278 B2 | 12/07/2016 |
| JP 2006-299196 A | 02/11/2006 | NONE | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160042872